Europäisches Patentamt

**(19)** European Patent Office

Office européen des brevets

**(11)** Numéro de publication : **0 361 997 B1**

# FASCICULE DE BREVET EUROPEEN

**(12)**

**(45)** Date de publication du fascicule du brevet :
**15.01.92 Bulletin 92/03**

**(51)** Int. Cl.⁵ : **B29C 67/14**

**(21)** Numéro de dépôt : **89402324.1**

**(22)** Date de dépôt : **23.08.89**

**(54)** Dispositif de nappage pour la mise en place automatique d'une nappe de fibres sur un moule.

**(30)** Priorité : **26.08.88 FR 8811244**

**(43)** Date de publication de la demande :
**04.04.90 Bulletin 90/14**

**(45)** Mention de la délivrance du brevet :
**15.01.92 Bulletin 92/03**

**(84)** Etats contractants désignés :
**DE ES FR GB IT**

**(56)** Documents cités :
**EP-A- 0 204 249**
**EP-A- 0 250 673**
**EP-A- 0 255 425**
**WO-A-84/00351**
**DE-A- 3 117 608**
**FR-A- 2 507 959**

**(56)** Documents cités :
**FR-A- 2 529 871**
**US-A- 3 574 040**
**US-A- 3 775 219**
**US-A- 4 591 402**
**US-A- 4 750 965**

**(73)** Titulaire : **BRISARD MACHINES-OUTILS**
**B.P. No 25**
**F-12700 Capdenac (FR)**

**(72)** Inventeur : **Greffioz, André**
**Lasternes Capdenac-Le-Haut**
**F-46100 Figeac (FR)**
Inventeur : **Tillement, Pierre**
**Avenue Léo Lagrange**
**F-12300 Decazeville (FR)**

**(74)** Mandataire : **Bertrand, Didier et al**
**c/o S.A. Fedit-Loriot 38, avenue Hoche**
**F-75008 Paris (FR)**

## Description

L'invention concerne la mise en place automatique, sur un moule, d'une nappe de fibres pour la fabrication de pièces diverses telles que des ailes d'avions, par exemple à partir d'un ruban composite constitué d'éléments de fibres encollées (par exemple par imprégnation de résine époxy) qui sont prédécoupés à la forme et aux dimensions désirées et qui sont maintenus entre deux pellicules de protection jusqu'à l'emplacement de leur application sur le moule. En général, la pellicule supérieure est constituée par un ruban de papier de caractéristiques mécaniques et chimiques appropriées, tandis que la pellicule inférieure est constituée par un film de matière plastique très mince. Le ruban composite ainsi constitué, d'une largeur souvent comprise entre 25 et 150 mm et d'une longueur d'environ 250 m, se présente sous la forme d'une bobine portée par une pièce orientable dite "tête de nappage".

La technique consiste à déposer, sur le moule, avec la plus grande précision possible, les éléments de fibres (déjà découpés et imprégnés) véhiculés sous la forme du ruban composite précité. Les machines actuelles, à cet effet, sont équipées d'un organe, tel qu'un rouleau ou un sabot d'application du ruban de fibres sur le moule, la bande supérieure de papier étant récupérée après son passage sous le rouleau d'application, le film de protection inférieur ayant été éloigné avant l'application des fibres contre le moule.

La tête de nappage, qui supporte notamment la bobine de ruban composite, les bobines de récupération des pellicules de protection et le dispositif applicateur, est portée par une structure, par exemple analogue à un portique, permettant de déplacer la tête de nappage, en translation, suivant un axe longitudinal X (ou axe d'avance), un axe transversal Y et un axe vertical Z, ainsi qu'en rotation autour de l'axe Z et autour d'un axe horizontal orienté suivant l'avance de la machine.

La tête de nappage, et donc le dispositif applicateur de ruban, peut ainsi être positionnée et orientée, généralement sous le contrôle d'une commande numérique, pour déposer le ruban composite suivant le profil choisi.

Des machines avec une telle tête de nappage mobile suivant cinq axes sont connues et ont été décrites par exemple dans les brevets US 3.775.219 et FR 2.529.871.

Pour obtenir une bonne qualité de la stratification, il est nécessaire que le ruban composite déposé soit appliqué, par le dispositif applicateur, aussi symétriquement que possible sur toute la largeur du ruban. C'est pourquoi, dans le brevet FR 2.529.871, il est proposé que l'axe de rotation de la tête de nappage, qui est horizontal, passe par le milieu de la ligne de contact du ruban avec la surface à revêtir.

Cependant, ce dispositif présente encore certains inconvénients qui empêchent d'atteindre la qualité désirable pour certaines applications, notamment la construction aéronautique.

En effet, si la surface à revêtir a été modifiée par les nappes déjà déposées ou si cette surface n'est pas suffisamment finement définie, la commande numérique n'est pas capable d'adapter l'orientation du dispositif applicateur à ces conditions particulières. Dans le brevet précité FR 2.529.871, on a prévu que les moyens de commande des oscillations de la tête de nappage, suivant l'axe parallèle à l'axe des X, sont sous la dépendance de détecteurs de proximité de la surface à revêtir. Cependant, dans ce cas, c'est toute la tête de nappage dont l'orientation doit être modifiée, ce qui représente avec tous les accessoires qu'elle porte (bobines, rouleau applicateur, secteur circulaire, etc.) un poids et une inertie importante entraînant des délais de réponse préjudiciables à la qualité de la stratification ou obligeant à réduire la vitesse de nappage.

Le document US-A-4591402, dont on incorpore ici l'enseignement par référence, a proposé de monter le rouleau d'application par l'intermédiaire d'une articulation. Mais, que cette articulation soit constituée par des axes de pivotement ou des chemins de roulement, il apparaît que la position du rouleau ne peut pas être maîtrisée avec suffisamment de précision.

La présente invention a pour but de remédier à cet inconvénient grâce à l'incorporation d'une articulation, suivant un axe horizontal, sur le support de l'organe d'application du ruban, de façon que l'orientation de cet organe s'adapte instantanément aux variations de profil rencontrées, sans présenter les inconvénients des articulations connues.

La présente invention a pour objet un dispositif de nappage, pour la mise en place automatique d'une nappe de fibres sur un moule, qui comprend une tête de nappage adaptée à se déplacer, sous le contrôle d'une commande numérique, en translation suivant trois axes X, Y, Z et, en rotation, autour de l'axe vertical Z ainsi qu'autour d'un axe horizontal orienté suivant l'avance de la machine, ladite tête de nappage portant un organe applicateur de la nappe de fibres à déposer sur la surface à revêtir, ledit organe applicateur étant monté sur un support qui est relié à la tête de nappage par une articulation autour d'un axe horizontal, l'articulation étant interposée entre un support auxiliaire, supportant l'organe applicateur et un support principal porté par la tête de nappage, caractérisé en ce que l'articulation est une articulation déformable sans jeu à très légère flexibilité.

En pratique, une telle articulation déformable, sans jeu, est constituée avantageusement par une partie pleine réservée entre deux fentes formées entre le support principal et le support auxiliaire.

Suivant l'invention, l'articulation flexible précitée, ne présente qu'une liberté limitée de flexion, de quelques degrés, par exemple 2 degrés et ne procure qu'une "adaptation" de l'orientation de l'organe applicateur suivant un axe d'oscillation qu'on peut désigner sous le nom d'axe auxiliaire, par rapport à l'axe "principal" de rotation de la tête de nappage, autour de l'axe horizontal précité, les rotations autour de cet axe "principal" étant commandées par la commande numérique de manière classique.

Suivant une forme de réalisation simple, cette articulation flexible pourrait être passive et elle permettrait simplement à l'organe applicateur de s'orienter de lui-même normalement à la surface.

Mais, dans ce cas, les pressions d'application de l'organe applicateur sur la bande de matériau composite ne sont pas réparties équitablement sur toute la largeur de la bande.

Suivant une forme de réalisation préférée, pour obtenir cette équi-répartition des pressions, l'articulation flexible est utilisée sous forme active, c'est-à-dire que toute flexion de l'articulation est détectée par un capteur qui délivre un signal. Après amplification, ce signal commande, par l'intermédiaire de la commande numérique de la machine, une rotation de la tête de nappage, suivant l'axe principal de rotation, dans le sens voulu pour retrouver la répartition équitable des pressions sur toute la largeur de la bande.

On obtient ainsi une qualité améliorée de la stratification du nappage.

L'organe applicateur est avantageusement un rouleau.

Avantageusement, le rouleau présente une double souplesse et comprend un axe déformable en flexion, procurant une souplesse générale, ledit axe étant entouré d'un volume en matériau souple déformable en compression locale.

Le rouleau a avantageusement une surface extérieure incurvée, soit convexe en tonneau, soit concave en diabolo.

Très avantageusement, le dispositif comprend des moyens de séparation de deux bandes protectrices de la bande de fibres imprégnées disposés en amont du rouleau applicateur.

Lorsque les mouvements de la tête de nappage sont commandés par une commande numérique, il est avantageux qu'un capteur de déplacement soit interposé entre le support auxiliaire et le support principal ; que les signaux fournis par ce capteur soient transmis, après amplification par un amplificateur, à la commande numérique pour adapter les instructions contenues dans la commande numérique et faire pivoter la tête de nappage dans le sens annulant la flexion de l'articulation flexible.

De préférence, le support principal est monté mobile verticalement sur la tête de nappage ; des ressorts ou vérins pneumatiques interposés entre le support principal et la tête de nappage tendent à exercer une pression de contact de l'organe applicateur sur la surface à revêtir ; un capteur de déplacement est interposé entre la tête de nappage et le support principal ; les signaux fournis par ce capteur sont transmis, après amplification par un amplificateur, à la commande numérique pour faire monter ou descendre, suivant la normale à la surface à revêtir, la tête de nappage et maintenir la déflexion du support principal à une valeur déterminée.

Selon un mode préféré de réalisation, le support principal comporte des bras montés en rotation autour d'un axe et des moyens de guidage centrés sur l'axe sont prévus pour guider la bande composite fournie et les bandes protectrices en retour.

L'invention vise également les machines de mise en forme automatique d'une nappe de fibres équipées d'un tel dispositif. D'autres perfectionnements seront décrits dans la suite de la description et à l'aide des dessins annexés.

La figure 1 est une vue simplifiée, de face, du dispositif de nappage suivant l'invention.

La figure 2 est une vue partielle de côté du même dispositif.

Les figures 3 et 4 sont des vues en coupe diamétrale et de côté d'un rouleau applicateur utilisable sur un dispositif de nappage suivant l'invention.

Les figures 5 et 6 sont des vues respectivement de côté et de face d'un mode préféré de réalisation de l'invention.

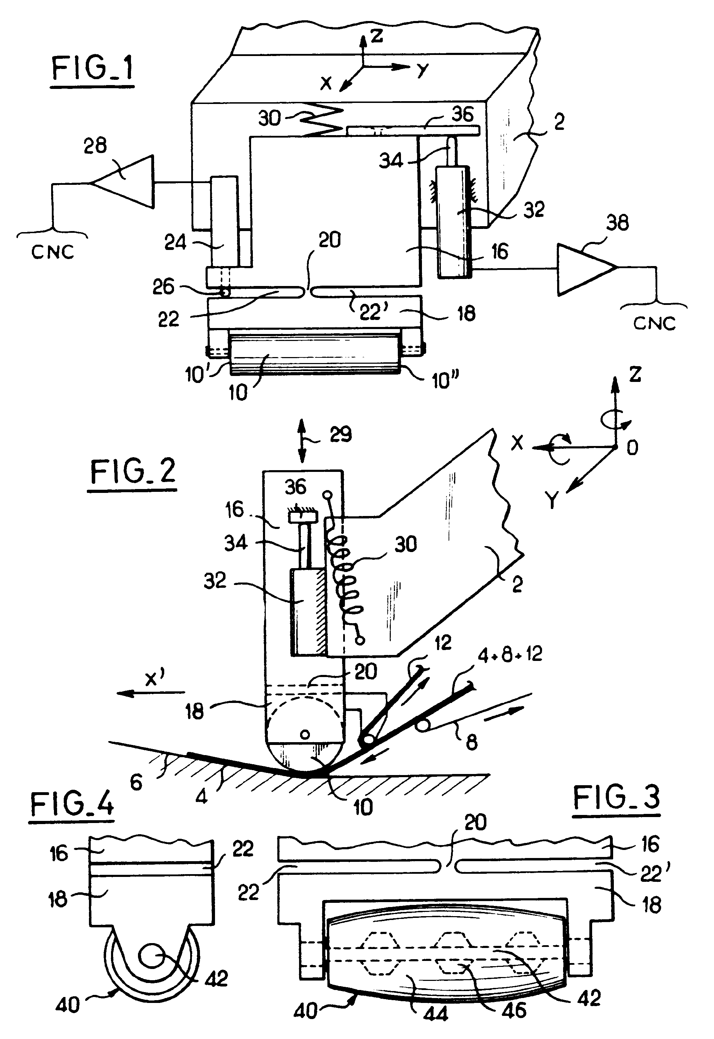

On a représenté schématiquement sur les figures 1 et 2 une tête de nappage 2 destinée à appliquer une bande de matériau composite 4 sur la surface d'un moule 6, par exemple pour la fabrication d'une partie d'un avion.

De façon connue, la tête de nappage 2 est portée par une structure (non représentée) de façon à se déplacer en translation suivant les trois axes X, Y, Z et, en rotation, autour de l'axe vertical Z et autour d'un axe horizontal orienté suivant l'avance de la machine.

Les déplacements de la tête de nappage sont contrôlés par une commande numérique (non représentée) de façon à suivre le profil de la surface 6 à revêtir.

La bande de matériau composite 4 + 8 + 12 se déroule d'une bobine d'alimentation (non représentée), est débarassée d'une bande protectrice inférieure 8, et est ensuite débarassée de la bande protectrice supérieure 12 puis est appliquée sur la surface 6 par un organe applicateur tel qu'un rouleau 10.

Comme représenté, et conformément au procédé décrit dans le brevet des Etats-Unis 4842684, la bande protectrice supérieure 12 (généralement en papier) est séparée de la bande composite immédiatement avant de passer sous l'organe applicateur (rouleau 10), de façon que seule la bande de fibres préimprégnées soit en contact avec le rouleau au point de contact avec la surface à revêtir. Le rouleau 10 est préférable à un sabot applicateur, car même si la bande de fibres débarassée de sa bande protectrice s'y colle, il peut tourner et permettre l'application.

Les différents organes du dispositif de nappage sont portés par un support principal ou chariot 16 qui peut être rigidement lié à la tête de nappage 2 mais est de préférence, comme on le verra plus loin, monté mobile verticalement sur la tête de nappage par coulissement, à la façon d'un chariot, ou bien au moyen d'un bras articulé.

Suivant l'invention, l'organe applicateur 10, tel qu'un rouleau, est porté par un support auxiliaire 18 qui est relié au support principal 16 par une articulation déformable flexible 20, la flexibilité de cette articulation se faisant autour d'un axe horizontal X' (figure 2) orienté suivant la direction de l'avance de la machine et situé à égale distance des bords 10'-10'' du rouleau 10.

L'articulation déformable 20 est seulement très légèrement flexible (par exemple 2 degrés) et elle a seulement une fonction adaptative, comme on le verra dans ce qui suit.

L'articulation 20 peut être simplement réalisée, comme représenté sur la figure 1, par taillage de deux fentes 22-22' entre le support principal 16 et le support auxiliaire 18, mais une autre forme d'articulation déformable flexible sans jeu, pourrait être utilisée, du moment que la faible flexibilité est prévue seulement autour de l'axe X' et que la liaison est sans jeu et rigide autour des autres axes.

De préférence, l'articulation 20 est située, dans le sens vertical, le plus près possible du rouleau 10 ou organe applicateur équivalent. Grâce à la flexibilité de l'articulation, l'organe applicateur peut porter normalement, sur toute sa largeur, contre la surface à revêtir.

Un capteur de déplacement 24 est fixé au support principal 16, son organe détecteur 26 étant en contact avec le support auxiliaire 18 (figure 1). Lorsque les pressions de nappage ne sont pas réparties équitablement d'un bord à l'autre du rouleau 10, une rotation minime se produit, grâce à l'articulation flexible 20. Un signal de déplacement est alors délivré par le capteur 24. Ce signal est amplifié par un amplificateur 28 et est envoyé à la commande numérique CNC, laquelle commande une rotation de la tête de nappage 2, autour de l'axe horizontal, dans le sens adéquat pour retrouver une répartition équitable des pressions sur toute la largeur de la bande déposée, ce qui améliore la qualité du nappage.

Cette fonction de l'articulation flexible est donc une fonction adaptative qui se superpose à la fonction classique de la commande numérique.

En plus du fait de ramener la répartition équitable de pression, cette fonction présente l'avantage que la tête de nappage est ramenée (par la rotation décrite ci-dessus) en position symétrique par rapport au support auxiliaire 18. Ceci est un avantage important, car plusieurs organes (par exemple les bobines d'alimentation et les bobines réceptrices ainsi que les rouleaux de guidage de la bande composite) sont portés soit par le support principal 16 soit par la tête 2 elle-même et l'on conserve ainsi le bon alignement entre ces divers organes et le rouleau applicateur. On évite donc les "dérives" ou "désalignement" du ruban qui sont nuisibles à la qualité du nappage.

Le dispositif suivant l'invention comprend de préférence, en plus, un système adaptatif automatique axial pour la régulation de la pression d'application de la bande composite.

Dans ce cas, le support principal 16 est monté, non pas rigidement sur la tête de nappage 2, mais avec une liberté de déplacement normal à la surface à revêtir limité (voir flèche 29 sur la figure 2), par exemple au moyen de glissières (non représentées), à la façon d'un chariot de machine outil. Un ou plusieurs ressorts ou vérins pneumatiques 30 tendent à faire descendre le chariot-support 16 par rapport à la tête de nappage 2 et à exercer une pression d'application du rouleau 10 sur la bande 4 à déposer.

Un capteur de déplacement 32 est fixé sur la tête de nappage 2 tandis que son organe mobile 34 porte contre une butée 36 solidaire du chariot-support 16. Le signal fourni par le capteur 32 est amplifié par un amplificateur 38 et transmis à la commande numérique CNC (figure 1) de façon à se superposer aux ordres délivrés par celle-ci et à maintenir le capteur en position centrale par soulèvement ou abaissement de la tête de nappage suivant la normale à la surface à revêtir.

Dans un dispositif suivant l'invention, la fonction d'adaptativité, aussi bien en rotation qu'en régulation de pression d'application, peut être sélectionnée ou non par une fonction auxiliaire de la commande numérique.

Le processus est le suivant :
lorsque la tête de nappage 2 descend, la commande adaptative est sélectionnée ou non par le programme. Si elle n'est pas sélectionnée, la rotation de la tête est commandée par la commande numérique d'une matière classique. Si elle est sélectionnée, alors elle est verrouillée tant que le rouleau ne touche pas la pièce. Le mouvement obéit alors aux informations délivrées par la commande numérique comme ci-dessus. Après contact, la fonction adaptative est déverrouillée et le mouvement de la tête est celui commandé par la commande numérique plus celui commandé par le signal délivré par le capteur 24. Cette option permet de maintenir la tête normale à la surface même si celle-ci est grossièrement définie ou si cette surface est modifiée par les nappes déjà déposées.

La fonction adaptative axiale est commandée par le capteur 32 et l'amplificateur 38. Son fonctionnement est analogue à celui de la commande en rotation. Son action est de monter et descendre la tête normalement à la surface à revêtir en fonction du signal délivré par le capteur 32 et amplifié par l'amplificateur 38. Les conditions de commande sont les mêmes que ci-dessus.

Dans un dispositif de nappage suivant la présente invention, on peut utiliser, comme organe applicateur un rouleau, ainsi qu'il est représenté sur les figures 1 et 2.

Mais on utilise de préférence un rouleau applicateur 40 tel que celui représenté sur les figures 3 et 4 et dont la construction est telle qu'il présente une double souplesse, l'une en flexion générale, l'autre en compression locale.

Le rouleau 40 est monté sur un axe 42 porté par le support auxiliaire 18 de la tête de nappage, cet axe étant réalisé par exemple en acier ou en fibres composites et étant déformable en flexion pour assurer la fonction de flexion générale du rouleau.

Le volume 44 du rouleau est en matière souple (par exemple uréthane, caoutchouc, plastique alvéolaire) qui peut se déformer en compression locale. Pour augmenter la souplesse, on peut prévoir des cavités vides 46 dans le volume 44 du rouleau. De préférence, la surface extérieure du rouleau a une forme adaptée à la surface à napper, par exemple une forme en tonneau (voir figure 3) pour surface concave, ou une forme en diabolo pour une surface convexe.

Grâce à cette double souplesse, en flexion générale et en compression locale, associée à la forme générale du rouleau on peut obtenir une pression de contact constante sur un plan ou sur une courbure donnée de la surface à revêtir.

La souplesse globale d'un rouleau ainsi réalisé est telle que la pression locale sur les fibres est faible, ce qui supprime l'effet de "vague" souvent rencontré avec les rouleaux applicateurs utilisés jusqu'à présent et permet d'obtenir, en combinaison avec le système adaptatif décrit dans ce qui précède, des structures stratifiées de haute qualité, notamment pour l'industrie aéronautique.

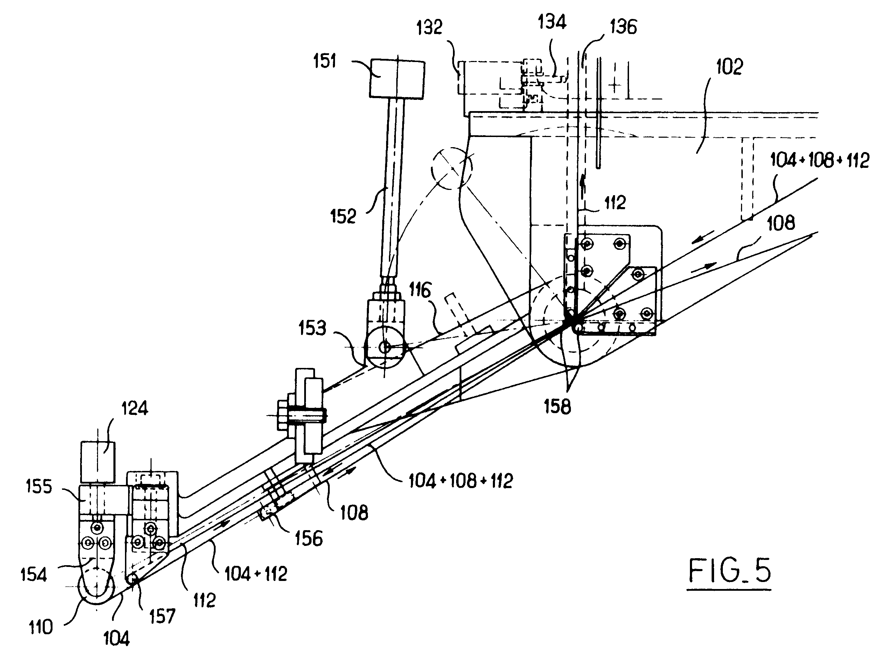

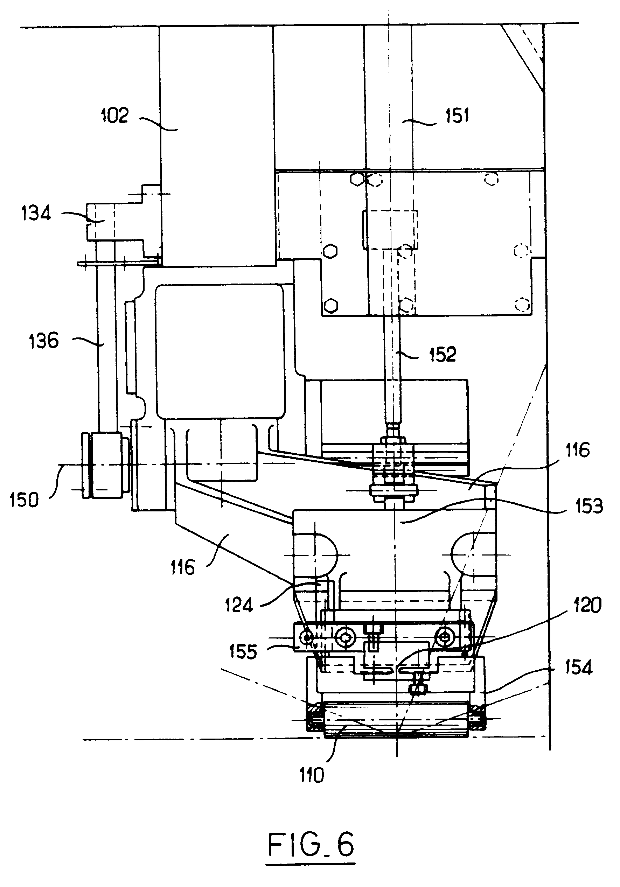

On a représenté sur les figures 5 et 6 un mode préféré de réalisation de l'invention.

Le rouleau applicateur 110 est monté sur la tête 102 par l'intermédiaire de deux bras applicateurs 116, supports de rouleau. Ces bras 116 sont montés pivotants autour d'un axe 150 et sont commandés par un vérin pneumatique 151 dont le corps est articulé à la tête 102 et dont la tige 152 est articulée sur une plaque 153 reliant les deux bras.

Le rouleau 110 tourillonne dans les branches d'un étrier 154 relié par l'articulation déformable 120 au support 155 solidaire des bras 116. L'articulation déformable permet une inclinaison très faible de l'ordre du 1/10eme de mm sur 50 mm.

Le capteur 124 permet de mesurer le déplacement, ou mieux les forces s'exerçant sur le rouleau 110.

Comme on le voit bien sur la figure 5, la bande de fibres avec ses deux pellicules 104 + 108 + 112 et amenée en dessous des bras applicateurs 116. Un rouleau 156 solidaire des bras ou de la plaque 153, permet de retirer le film protecteur 108.

L'ensemble 104 + 112 continue jusqu'à un second rouleau 157, situé juste en amont du rouleau applicateur 110, et permettant d'extraire le papier 112, ce qui permet de laisser passer sur le rouleau 110, la seule bande nue 104 de fibres préimprégnées.

A l'endroit de l'axe 150 des bras applicateurs, des galets de guidage 158 pincent, d'une part, l'ensemble 104 + 108 + 112 fourni, d'autre part, les bandes 108 et 112 en retour, de manière à garantir la constance des longueurs de bande quelle que soit la déflexion des bras applicateurs 116.

Le déplacement normal à la surface d'application du bras, ou la force d'application du bras, est mesurée grâce à un capteur de déplacement 132 dont la tige 134 s'appuie sur une barrette 136 solidaire en rotation des bras 116.

Le fonctionnement de capteurs 136 et 124 est analogue à ce qui a déjà été expliqué à l'occasion des figures 1 et 2.

En particulier la commande numérique est prévue pour mémoriser et calculer les trois coordonnées géométriques de chaque point de la surface, et également les trois composantes géométriques du vecteur normal à la surface audit point, de manière à pourvoir commander le mouvement de dégagement du rouleau applicateur normalement à la surface, ce qui évite des entraînements involontaires par frottement de la bande appliquée et donc des erreurs de positionnement.

## Revendications

1. Dispositif de nappage, pour la mise en place automatique d'une nappe de fibres sur un moule, qui comprend une tête de nappage adaptée à se déplacer, sous le contrôle d'une commande numérique, en translation suivant trois axes X, Y, Z et, en rotation, autour de l'axe vertical Z ainsi qu'autour d'un axe horizontal orienté selon l'avance de la machine, ladite tête de nappage (2, 102) portant un organe applicateur (10, 110) de la nappe de fibres (4, 104) à déposer sur la surface (6) à revêtir, ledit organe applicateur (10, 110) étant monté sur un support (18) qui est relié à la tête de nappage (2, 102) par une articulation (20, 120) autour d'un axe de rotation horizontal X' s'étendant sensiblement dans la direction d'avance de la machine, l'articulation (20, 120) étant interposée entre un support auxiliaire (18), supportant l'organe applicateur (10, 110) et un support principal (16, 116) porté par la tête de nappage (2, 102), caractérisé en ce que l'articulation est une articulation déformable sans jeu (20, 120), à très légère flexibilité.

2. Dispositif selon la revendication 1, caractérisé en ce que l'articulation flexible (20, 120) est constituée par une partie pleine réservée entre deux fentes (22-22') formées entre le support principal (16) et le support auxiliaire (18).

3. Dispositif selon l'une des revendications 1 ou 2, caractérisé en ce que l'articulation flexible (20, 120) est située à égale distance des deux bords (10'-10") de l'organe applicateur (10).

4. Dispositif selon l'une des revendications précédentes, caractérisé en ce que l'organe applicateur est un rouleau (10, 110).

5. Dispositif selon la revendication 4, caractérisé en ce que le rouleau (40) présente une double souplesse et comprend un axe (42) déformable en flexion, procurant une souplesse générale, ledit axe étant entouré d'un volume (44) en matériau souple déformable en compression locale.

6. Dispositif selon la revendication 5, caractérisé en ce que le rouleau (40) a une surface extérieure incurvée.

7. Dispositif selon l'une quelconque des revendications 1 à 6, caractérisé en ce qu'il comprend des moyens (156, 157) de séparation de deux bandes protectrices (108, 112) de la bande de fibres imprégnées (104) disposés en amont du rouleau applicateur (110).

8. Dispositif selon l'une des revendications 1 à 7, dans lequel les mouvements de la tête de nappage sont commandés par une commande numérique, caractérisé : en ce qu'un capteur de déplacement (24, 124) est interposé entre le support auxiliaire (18) et le support principal (16) ; en ce que les signaux fournis par ce capteur sont transmis, après amplification par un amplificateur (28), à la commande numérique pour adapter les instructions contenues dans la commande numérique et faire pivoter la tête de nappage (2, 102) dans le sens annulant la flexion de l'articulation flexible (20, 120).

9. Dispositif selon la revendication 8, caractérisé en ce que le support principal (16, 116) est monté mobile verticalement sur la tête de nappage (2, 102); en ce que des ressorts ou vérins pneumatiques (30, 151) interposés entre le support principal (16, 116) et la tête de nappage (2, 102) tendent à exercer une pression de contact de l'organe applicateur (10, 110) sur la surface (6) à revêtir ; en ce qu'un capteur de déplacement (32, 132) est interposé entre la tête de nappage (2, 102) et le support principal ; et en ce que les signaux fournis par ce capteur sont transmis, après amplification par un amplificateur (38), à la commande numérique pour faire monter ou descendre, selon la normale à la surface à revêtir, la tête de nappage (2, 102) et maintenir la déflexion du support principal à une valeur déterminée.

10. Dispositif selon la revendication 9, caractérisé en ce que le support principal (116) comporte des bras montés en rotation autour d'un axe (150), et en ce que des moyens de guidage (158) centrés sur l'axe (150) sont prévus pour guider la bande composite fournie (104, 108, 112) et les bandes protectrices en retour (108, 112).

## Patentansprüche

1. Auflegevorrichtung zum automatischen Aufbringen einer Fasermatte auf eine Form, die einen Auflegekopf (2, 102) besitzt, der sich unter der Einwirkung einer numerischen Steuerung längs drei Achsen X, Y, Z geradlinig bewegen und um die vertikale Achse Z sowie um eine in der Vorschubrichtung der Maschine gerichtete horizontale Achse drehen kann und der ein Auftragorgan (10, 110) zum Auftragen der auf die zu beschichtende Fläche (6) aufzubringenden Fasermatte (4, 104) trägt, das auf einem Halter (18) montiert ist, der mit dem Auflegekopf (2, 102) durch ein Gelenk (20, 120) verbunden ist, das eine horizontale, sich im wesentlichen in der Vorschubrichtung der Maschine erstreckende Drehachse X' besitzt und zwischen einem das Auftragorgan (10, 110) tragenden Zusatzhalter (18) und einem von dem Auflegekopf (2, 102) getragenen Haupthalter (16, 116) eingesetzt ist, dadurch gekennzeichnet, daß das Gelenk ein spielfrei verformbares Gelenk (20, 120) mit sehr leichter Flexibilität ist.

2. Vorrichtung nach Anspruch 1, dadurch gekennzeichnet, daß das flexible Gelenk (20, 120) aus einem massiven Teil besteht, der zwischen zwei Schlitzen (22-22') bestehen bleibt, die zwischen dem Haupthalter (16) und dem Zusatzhalter (18) geformt sind.

3. Vorrichtung nach einem der Ansprüche 1 oder 2, dadurch gekennzeichnet, daß das flexible Gelenk (20, 120) im gleichen Abstand von den beiden Rändern (10'-10") des Auftragorgans (10) angeordnet ist.

4. Vorrichtung nach einem der vorhergehenden Ansprüche, dadurch gekennzeichnet, daß das Auftragorgan eine Rolle (10, 110) ist.

5. Vorrichtung nach Anspruch 4, dadurch gekennzeichnet, daß die Rolle (40) eine zweifache Nachgiebigkeit besitzt und eine Achse (42) aufweist, die durch Biegung verformbar ist, die eine allgemeine Nachgiebigkeit verschafft, und von einem Volumen (44) aus einem nachgiebigen, durch örtliche Kompression verformbaren Werkstoff umgeben ist.

6. Vorrichtung nach Anspruch 5, dadurch gekennzeichnet, daß die Rolle (40) eine gekrümmte Außenfläche hat.

7. Vorrichtung nach einem der Ansprüche 1 bis 6, gekennzeichnet durch vor der Auftragrolle (110) angeordnete Einrichtungen (156, 157) zum Trennen von zwei Schutzbänden (108, 112) von dem imprägnierten Faserband (104).

8. Vorrichtung nach einem der Ansprüche 1 bis 7, bei der die Bewegungen des Auflegekopfes durch eine numerische Steuerung gesteuert sind, dadurch gekennzeichnet, daß ein Bewegungsfühler (24, 124) zwischen den Zusatzhalter (8) und den Haupthalter (16) eingesetzt ist, daß die von dem Fühler gelieferten Signale nach Verstärkung durch einen Verstärker (28) auf die numerische Steuerung übertragen werden, um die in der numerischen Steuerung enthaltenen Befehle anzupassen und den Auflegekopf (2, 102) so verschwenken zu lassen, daß die Biegung des flexiblen Gelenks (20, 120) aufgehoben wird.

9. Vorrichtung nach Anspruch 8, dadurch gekennzeichnet, daß der Haupthalter (16, 116) auf dem Auflegekopf (2, 102) vertikal beweglich montiert ist, daß zwischen den Haupthalter (16, 116) und den Auflegekopf (2, 102) eingesetzte Federn oder Pneumatikzylinder (30, 151) bestrebt sind, einen Kontaktdruck des Auftragorgans (10, 110) auf die zu beschichtende Fläche (6) auszuüben, daß ein Bewegungsfühler (32, 132) zwischen den Auflegekopf (2, 102) und den Haupthalter eingesetzt ist und daß die von diesem Fühler gelieferten Signale nach Verstärkung durch einen Verstärker (38) auf die numerische Steuerung übertragen werden, um den Auflegekopf (2, 102) senkrecht zu der zu beschichtenden Fläche heben oder senken zu lassen und den Ausschlag des Haupthalters auf einem vorbestimmten Wert zu halten.

10. Vorrichtung nach Anspruch 9, dadurch gekennzeichnet, daß der Haupthalter (116) um eine Achse (150) drehbar montierte Arme besitzt und daß auf die Achse (150) zentrierte Führungseinrichtungen (158) vorgesehen sind, um das gelieferte Verbundband (104, 108, 112) und die Schutzbänder (108, 112) in Rückbewegung zu führen.

**Claims**

1. Lay-up device for automatic positioning of a web of fibers on a mold, which comprises a lay-up head adapted to move under the control of a numerical control unit, in translation along three axes X, Y, Z and in rotation about the vertical axis Z as well as about a horizontal axis oriented in the direction of feed motion of the machine, said lay-up head (2, 102) being adapted to carry a member (10, 110) for applying the web of fibers (4, 104) to be deposited on the surface (6) to be covered, said application member (10, 110) being mounted on a support (18) which is connected to the lay-up head (2, 102) by means of an articulation (20, 120) about a horizontal axis of rotation X′ which extends substantially in the direction of feed motion of the machine, the articulation (20, 120) being interposed between an auxiliary support (18) which carries the application member (10, 110) and a main support (16, 116) carried by the lay-up head (2, 102), characterized in that the articulation is a deformable articulation without play (20, 120) and has very slight flexibility.

2. Device according to claim 1, characterized in that the flexible articulation (20, 120) is constituted by a full portion reserved between two slits (22-22′) formed between the main support (16) and the auxiliary support (18).

3. Device according to either claim 1 or claim 2, characterized in that the flexible articulation (20, 120) is located at equal distance from the two edges (10′-10″) of the application member (10).

4. Device according to one of the preceding claims, characterized in that the application member is a roller (10, 110).

5. Device according to claim 4, characterized in that the roller (40) has double flexibility and comprises a spindle (42) which is capable of flexural deformation and provides general flexibility, said spindle being surrounded by a volume (44) of flexible material which is deformable in local compression.

6. Device according to claim 5, characterized in that the roller (40) has a curved external surface.

7. Device according to any one of claims 1 to 6, characterized in that it comprises means (156, 157) for separating two protective strips (108, 112) from the strip of impregnated fibers (104) placed upstream of the application roller (110).

8. Device according to one of claims 1 to 7, in which the movements of the lay-up head are controlled by a numerical control unit, characterized in that a motion sensor (24, 124) is interposed between the auxiliary support (18) and the main support (16), that the signals delivered by said sensor are transmitted to the numerical control unit after amplification by an amplifier (28) in order to adapt the instructions contained in the numerical control unit and to displace the lay-up head (2, 102) in pivotal motion in the direction which cancels the flexural deformation of the flexible articulation (20, 120).

9. Device according to claim 8, characterized in that the main support (16, 116) is mounted so as to be capable of moving vertically on the lay-up head (2, 102), that springs or pneumatic jacks (30, 151) interposed between the main support (16, 116) and the lay-up head (2, 102) tend to exert a contact pressure of the application member (10, 110) on the surface (6) to be covered, that a motion sensor (32, 132) is interposed between the lay-up head (2, 102) and the main support, and that the signals delivered by said sensor are transmitted to the numerical control unit after amplification by an amplifier (38) in order to lift or lower the lay-up head (2, 102) in a direction normal to the surface to be covered and to maintain the deflection of the main support at a predetermined value.

10. Device according to claim 9, characterized in that the main support (116) is provided with arms mounted for rotation about an axis (150) and that guiding means (158) centered on the axis (150) are provided for guiding the composite strip which is being delivered (104, 108, 112) and the protective strips on the return run (108, 112).

EP 0 361 997 B1

FIG_1

FIG_2

FIG_4

FIG_3

FIG.5

EP 0 361 997 B1

FIG_6